# DEMANDE DE BREVET EUROPEEN

(11) **EP 4 556 442 A1**
(43) Date de publication de la demande: **21.05.2025**
(21) Numéro de dépôt: 24212714.0
(22) Date de dépôt: 13.11.2024
(51) Int. Cl.: C01C 3/12, H01M 4/58, H01M 10/054

(54) **PROCÉDÉ DE SYNTHÈSE D'ANALOGUES BLEUS DE PRUSSE UTILES À TITRE DE MATÉRIAU ACTIF CATHODIQUE**

(30) Priorité: 14.11.2023 FR 2312443
(71) Demandeur: Commissariat à l'Energie Atomique et aux Energies Alternatives, 75015 Paris (FR)
(72) Inventeur: DAUTAIN, Nicolas, 38054 GRENOBLE CEDEX 09 (FR); PERALTA, David, 38054 GRENOBLE CEDEX 09 (FR)
(74) Mandataire: Cabinet Nony

(57) **Abrégé**

L'invention vise un procédé de synthèse de particules d'un analogue Bleu de Prusse de formule AₓM1_{y}M2_{z}(CN)₆ comprenant au moins les étapes consistant à:
a) Disposer d'une part, d'une solution aqueuse A comprenant au moins un sel hydrosoluble d'un métal de transition M1 et au moins un sel hydrosoluble d'un métal de transition M2 et d'autre part, d'une solution aqueuse B contenant au moins du cyanure de potassium ou de sodium ;
b) Injecter simultanément, de manière séparée l'une de l'autre lesdites solutions A et B dans un réacteur contenant au moins un milieu aqueux et
c) Maintenir dans ledit réacteur, le mélange des solutions A et B ainsi formé, sous agitation et dans des conditions propices à la formation des particules dudit analogue Bleu de Prusse par co-précipitation,
lesdites étapes b et c étant réalisées sous atmosphère inerte et à une valeur de pH contrôlée, variant de 8 à 11.

## Description

### Domaine technique

La présente invention concerne le domaine des dispositifs électrochimiques de type accumulateurs ou batteries métal-ion, notamment des batteries sodium-ion ou potassium-ion.

Elle vise plus précisément à proposer un nouveau procédé de synthèse de particules d'analogue Bleu de Prusse qui sont particulièrement utiles à titre de matériau actif de cathodes dans des batteries sodium-ion ou potassium-ion.

### Technique antérieure

Les dispositifs électrochimiques de type batteries métal-ion dominent actuellement le marché des dispositifs électrochimiques rechargeables. Ils trouvent de multiples applications, notamment dans l'alimentation des systèmes embarqués de faible épaisseur, comme les cartes de crédit, les étiquettes intelligentes, dans l'alimentation des téléphones mobiles, le stockage de l'énergie de cellules photovoltaïques ou encore dans l'alimentation des véhicules électriques. Divers systèmes de stockage électrochimiques ou générateurs électrochimiques ont donc été développés, notamment des batteries sodium-ion, lithium-ion, potassium-ion, magnésium-ion.

Actuellement, les batteries lithium-ion s'imposent sur le marché des batteries rechargeables notamment en raison des propriétés électrochimiques exceptionnelles du lithium. Cependant, cette technologie présente des inconvénients, notamment en raison de la rareté relative des ressources en lithium considéré aujourd'hui comme un métal critique.

Les piles ioniques au sodium ou au potassium représentent des alternatives intéressantes et sont également des moyens viables de soutenir les sources d'énergie renouvelables dans le but de niveler la charge et de stocker l'énergie excédentaire. Les performances de ces batteries à ions sodium ou potassium dépendent fortement des propriétés des matériaux actifs d'électrodes. Or, les matériaux actifs cathodiques analogues aux Bleus de Prusse (PBA) se distinguent précisément en tant que matériaux prometteurs pour une utilisation dans les batteries à ions sodium ou potassium. Les analogues Bleus de Prusse à base de sodium et de potassium sont majoritairement synthétisés par précipitation dans l'eau d'un complexe hexacyanométallate A₄M₁(CN)₆ avec un sel de l'autre métal de transition M₂. La demande JP2018106911 A ou encore les brevets CN110002466B B et CN110002466B décrivent une telle synthèse à partir de l'hexacyanométallate et du sel de l'autre métal de transition M2. Néanmoins, les voies de synthèse décrites dans ces documents ne permettent pas de contrôler efficacement la morphologie des particules : des agrégats micrométriques de particules nanométriques sont obtenus, de tailles et de formes non homogènes, conduisant à un matériau présentant une faible densité d'énergie volumique et une faible cyclabilité. L'ajout d'un agent chélatant (citrate de potassium, EDTA, oxalate...) dans la solution du sel de métal de transition M2 permet un meilleur contrôle de la morphologie des particules. L'agent chélatant forme un complexe avec le métal de transition M2 du sel de métal de transition, le rendant moins disponible pour la réaction de précipitation et ralentissant donc la cinétique de cette dernière. Un autre procédé de synthèse consiste à former dans un premier temps des nanosphères d'hydroxyde de manganèse à l'aide d'un polymère (acide polyacrylique) puis, dans un second temps, à faire réagir ces sphères avec l'hexacyanoferrate de potassium (K₄Fe(CN)₆). Toutefois, par analogie aux procédés précités, ce procédé nécessite également systématiquement l'utilisation du précurseur de K₄Fe(CN)₆ qui est de synthèse complexe. Dans la demande JP2012046399A, des particules de K_{1,9}Mn_{1,1}[Mn(CN)₆] et K₂MnFe(CN)₆, sont synthétisées en ajoutant goutte-à-goutte une solution aqueuse contenant un mélange des deux sels de métaux de transition directement dans une solution de cyanure de potassium KCN. Toutefois, le matériau particulaire ainsi obtenu consiste en des agrégats de nanoparticules de tailles diverses et ne s'avère donc pas totalement satisfaisant à titre de matériau d'électrode.

### Exposé de l'invention

La présente invention vise précisément à proposer un nouveau procédé de synthèse de particules d'un analogue Bleu de Prusse, qui soit simple de mise en oeuvre, économique et reproductible.

En particulier, la présente invention a pour objectif de s'affranchir de la mise en oeuvre de précurseurs à l'image du K₄Fe(CN)₆ et qui sont de synthèse complexe.

La présente invention a également pour objectif de proposer un procédé permettant d'accéder à des particules de PBA de forme contrôlée en taille et en homogénéité.

La présente invention a également pour objectif de proposer un procédé propice à un tel contrôle grâce à une maîtrise de la cinétique de la réaction entre le cyanure et les sels métalliques et en particulier une régulation des phases de germination et de croissance des particules qui en découlent.

Les inventeurs ont désormais découvert qu'il est possible de répondre à ces attentes sous réserve de retenir une technique de synthèse particulière.

### Résumé de l'invention

Ainsi, la présente invention concerne selon son aspect principal, un procédé de synthèse de particules d'un analogue Bleu de Prusse, dit encore PBA, de formule (I) :

AₓM1_{y}M2_{z}(CN)₆ (I)

dans laquelle :
   - A représente un atome de sodium, Na, ou de potassium, K,
   - M1 et M2, identiques ou différents, sont choisis parmi les métaux de transition Ti, Nb, V, Cr, Mn, Fe, Co, Ni, Cu, Zn et de préférence parmi le Fe et le Mn,
   - x est non nul et varie de 0 à 2,2, et préférentiellement est proche de 2
   - y varie de 0 à 2 et de préférence est non nul,
   - z varie de 0 à 2 et de préférence est non nul,
   - y+z = 2
et ses hydrates,
comprenant au moins les étapes consistant à :
   a) Disposer d'une part, d'une solution aqueuse A comprenant au moins un sel hydrosoluble d'un métal de transition M1 et au moins un sel hydrosoluble d'un métal de transition M2 et d'autre part, d'une solution aqueuse B contenant au moins du cyanure de potassium ou de sodium ;
   b) Injecter simultanément, de manière séparée l'une de l'autre et à un débit contrôlé lesdites solutions A et B dans un réacteur, dit de précipitation, contenant au moins un milieu aqueux et en particulier de l'eau et
   c) Maintenir dans ledit réacteur, le mélange des solutions A et B ainsi formé, sous agitation, en particulier sous atmosphère inerte, et dans des conditions propices à la formation de particules dudit analogue Bleu de Prusse de formule (I) par co-précipitation,
lesdites étapes b et c étant réalisées sous atmosphère inerte, à une valeur de pH contrôlée variant de 8 à 11, préférentiellement de l'ordre de 9,9.

Selon un mode de réalisation particulier, M1 et M2 dans la formule générale (I) sont choisis parmi le Fe et le Mn, et x est proche voire égal à 2, y varie de 0 à 2 et de préférence est de 1, et z varie de 0 à 2 et de préférence est de 1 avec y+z étant égal à 2.

Comme il ressort de ce qui précède, une des caractéristiques du procédé de l'invention est le fait que les sels, respectivement présents dans les solutions A et B, sont introduits de manière dissociée au sein du réacteur et ceci est avantageux à plusieurs titres.

Le fait d'injecter la solution B de KCN en parallèle de la solution A métallique, s'avère en effet particulièrement déterminant pour contrôler la cinétique de réaction entre les métaux des deux solutions A et B et le cyanure.

Il s'avère ainsi possible de réguler les phases de germination et de croissance des particules en intervenant d'une part, sur les débits d'injection des deux solutions A et B, et d'autre part, sur les concentrations des solutions réactives au sein du réacteur.

De plus, un contrôle de leurs concentrations respectives dans le réacteur, notamment via leur débit d'injection dans ce réacteur, permet avantageusement de réguler les phases de germination et de croissance des particules attendues. Par exemple, dans l'hypothèse d'un réacteur de volume variant de 500 mL à 2 L, il est avantageux que les solutions A et B soient injectées en parallèle dans ledit réacteur avec un débit variant de 1 mL/min à 5 mL/min et préférentiellement de 2 mL/min à 4 mL/min.

En outre, le procédé selon l'invention est compatible avec l'ajustement d'un pH imposé et constant, soit en ajustant le débit de la source d'anion, en l'occurrence CN⁻, soit en considérant un ajout contrôlé d'une base. Il en résulte une maîtrise de la cinétique de précipitation. Il est important de faire remarquer qu'un tel contrôle, ne peut se réaliser en faisant goutter une des solutions A ou B dans l'autre. Dans un tel mode de réalisation, le pH est forcément « subi ».

Ainsi, selon une variante de réalisation, le pH est ajusté dans le réacteur par injection contrôlée d'une solution de KOH ou NaOH.

Selon une autre variante de réalisation, l'étape c) est réalisée en présence d'au moins un agent chélatant.

Le procédé selon l'invention qui repose donc sur une opération de co-précipitation permet d'accéder à des particules de taille contrôlée et homogène.

Avantageusement, le procédé de synthèse de la présente invention permet d'obtenir directement des particules présentant une forme sphérique.

En particulier, les particules possèdent avantageusement un D50 de 0,5 µm à 25 µm, de préférence de 0,5 µm à 3 µm. Cette taille peut notamment être caractérisée par granulométrie laser.

Ces ajustements en morphologie et en taille sont précisément avantageusement contrôlables par le procédé selon l'invention et ses paramètres de synthèse tels que les concentrations en réactifs, le pH ou encore la concentration en agent chélatant si présent.

Selon un autre de ses aspects la présente invention concerne également des particules d'un analogue Bleu de Prusse de formule (I) :

AₓM1_{y}M2_{z}(CN)₆ (I)

dans laquelle :
   - A représente un atome de sodium, Na, ou de potassium, K,
   - M1 et M2, identiques ou différents, sont choisis parmi le Fe et le Mn,
   - x est non nul et varie de 0 à 2,2, préférentiellement est de l'ordre de 2
   - y varie de 0 à 2, et de préférence est non nul,
   - z varie de 0 à 2 et de préférence est non nul et
   - y+z = 2
lesdites particules possédant un D50 de 0,5 µm à 25 µm, de préférence de 0,5 µm à 3 µm, caractérisé par granulométrie laser.

Un autre aspect de l'invention concerne les particules d'un analogue Bleu de Prusse de formule (I) conforme à l'invention directement obtenues par un procédé selon l'invention. Comme il ressort des exemples ci-après ces particules sont particulièrement utiles à titre de matériau actif pour cathode.

Ainsi, un autre aspect de l'invention vise l'utilisation de ces particules dans une batterie sodium-ion ou potassium-ion.

D'autres caractéristiques, variantes et avantages des matériaux composites selon l'invention, de leur préparation et de leur mise en oeuvre, ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente le diffractogramme, obtenu par diffraction des rayons X, des microparticules de matériau de type PBA obtenues à l'exemple 1.
[Fig 2] présente le profil galvanostatique obtenu au premier cycle d'une pile bouton en boîte à gant, utilisant comme cathode les électrodes ainsi formées à l'exemple 2, et dont le régime de cyclage est C/20.
[Fig 3] présente la courbe de cyclage (capacité de décharge en fonction du nombre de cycles) d'une pile bouton en boîte à gant, utilisant comme cathode les électrodes ainsi formées à l'exemple 2, et dont le régime de cyclage est C/20.

### Description détaillée

Comme mentionné précédemment, le procédé de l'invention vise à former un matériau actif PBA de formule générale (I)

AₓM1_{y}M2_{z}(CN)₆ (I)

dans laquelle :
- A représente un atome de sodium, Na, ou de potassium, K,
- M1 et M2, identiques ou différents, sont choisis parmi les métaux de transition Ti, Nb, V, Cr, Mn, Fe, Co, Ni, Cu, Zn et de préférence parmi le Fe et le Mn,
- x est non nul et varie de 0 à 2,2, préférentiellement proche de 2
- y varie de 0 à 2 et de préférence est non nul,
- z varie de 0 à 2 et de préférence est non nul et
- y+z = 2

Au sens de l'invention, les termes atome de Na, K, et les symboles M1 et M2 entendent couvrir les formes chargées des éléments considérés. Par exemple, Na couvre Na⁺ et M1 couvre Mn⁺⁺,

En particulier, M1 et M2 de formule générale (I) sont choisis parmi le Fe et le Mn, et x est proche de 2 et de préférence égal à 2 ; y varie de 0 à 2 et de préférence est 1, et z varie de 0 à 2 et de préférence est 1 et y+z=2.

Selon une variante de réalisation préférée, M1 et M2 sont différents et en particulier M1 est Mn et M2 est Fe. Dans cette variante le procédé est avantageux pour former le K₂Mn[Fe(CN)₆] ou le Na₂Mn[Fe(CN)₆] et de préférence le K₂Mn[Fe(CN)₆].

Comme il ressort des exemples ci-après, le K₂Mn[Fe(CN)₆] formé selon le procédé de l'invention, est caractérisé par une structure monoclinique de groupe d'espace P21/n selon la notation Hermann-Mauguin (International Tables for Crystallography (2016). Volume A, Space-group symmetry)

En particulier, les particules possèdent un D50 de 0,5 µm à 25 µm. de préférence de 0,5 µm à 3 µm. Cette taille peut notamment être caractérisée par granulométrie laser.

Selon l'invention, les composés de formule générale (I) sont formés dans un réacteur, dit réacteur de précipitation, dans lequel sont injectées, simultanément et de manière séparée, la solution A contenant au moins un sel hydrosoluble de M1 et au moins un sel hydrosoluble de M2 et la solution B contenant au moins un sel de cyanure choisi parmi le cyanure de potassium et cyanure de sodium.

En d'autres termes, les sels hydrosolubles de M1 et de M2 ne sont pas introduits dans un réacteur contenant déjà au moins un sel de cyanure et ne sont donc pas ajoutés audit sel de cyanure.

### Solution A

En particulier, la solution A contient, à titre de M1, un sel de manganèse choisi parmi les sels Mn(NO₃)₂, Mn(SO₄)₂, MnCl₂, Mn(CH₃CO₂)₂ et leurs hydrates et de préférence le sel MnSO₄.H₂O.

En particulier, la solution A, contient à titre de M2, un sel de fer choisi parmi les sels Fe (NO₃)₂, Fe(SO₄)₂, FeCl₂ et leurs hydrates et de préférence le FeSO₄.7H₂O.

La solution A peut posséder avantageusement une concentration molaire en sels M1 et M2 variant de 0,1 à 2,5 M. Bien entendu, il est possible de considérer des concentrations supérieures sous réserve d'ajuster la température réactionnelle à une température propice à l'interaction de ces sels avec les anions de la solution B.

La solution A est mise en oeuvre sous une forme désoxygénée pour éviter toute oxydation des sels qu'elle contient.

### Solution B

En ce qui concerne la solution B contenant ledit sel de cyanure, elle est également mise en oeuvre sous une forme désoxygénée.

La solution B peut posséder avantageusement une concentration molaire en sels de cyanure variant de 0,1 à 7,5 M. Toutefois, comme évoqué pour la solution A, une concentration supérieure est envisageable sous réserve d'ajuster la température réactionnelle à une température propice à l'interaction de ces anions avec les sels de la solution A.

Le sel de cyanure de la solution B et les sels de métaux de transition M1 et M2 de la solution A peuvent être mis en présence dans un rapport molaire sels M1+M2/CN de K ou Na variant de 2,5 à 3,5, préférentiellement 3.

Les solutions A et B peuvent être introduites avec un débit respectif variant de 1 mL/min à 5 mL/min et préférentiellement de 2 mL/min à 4 mL/min. Pour des raisons évidentes, ces débits sont également modulables hors de la plage proposée en fonction de la capacité du réacteur. Ces ajustements relèvent des compétences de l'homme de l'art.

En particulier, les solutions A et B sont introduites dans le réacteur à des débits de valeurs équivalentes.

La réaction est réalisée dans un réacteur de précipitation, contenant déjà un milieu aqueux, de préférence de l'eau, sous atmosphère inerte, notamment sous argon.

Une fois, la totalité des solutions A et B introduites dans le réacteur, le mélange ainsi formé y est maintenu sous agitation jusqu'à précipitation de la totalité du composé de formule générale (I) attendu.

Ce mélange peut notamment être maintenu sous agitation en étape c) de 1h à 24h, préférentiellement de 2h à 6h.

La température dans le réacteur lors de l'étape c) peut être maintenue de 20°C à 70°C, préférentiellement de 25°C à 35°C.

Les particules de l'analogue Bleu de Prusse de formule (I) obtenues à l'issue de l'étape c) sont récupérées, notamment par centrifugation et généralement lavées et séchées. Ces opérations relèvent clairement des compétences de l'homme du métier et ne seront donc pas détaillées dans la présente description.

Comme précisé ci-dessus, il est avantageux, pour contrôler la taille des particules de l'analogue Bleu de Prusse de formule (I), que le procédé de synthèse soit réalisé à une valeur de pH contrôlée et notamment variant de 8 à 11 préférentiellement 9,9.

Comme précisé ci-dessus, ce contrôle de pH du réacteur peut notamment être ajusté directement en contrôlant le débit de la solution B et/ou par ajout d'une troisième solution basique NaOH ou KOH.

Il peut être également avantageux que la réaction, réalisée au sein du réacteur, s'effectue en présence d'au moins un agent chélatant.

Cet agent chélatant peut être choisi par exemple parmi le citrate de potassium, l'acide éthylènediaminetétraacétique, l'EDTA, et les oxalates.

Il peut être introduit dans le réacteur indépendamment des solutions A et B ou non.

Comme précisé dessus, les particules d'un analogue Bleu de Prusse de formule (I) obtenues selon l'invention sont particulièrement intéressantes à titre de matériau actif pour une électrode et notamment une cathode.

Comme illustré dans les exemples qui suivent, une cathode comprenant des particules d'un analogue Bleu de Prusse de formule (I) obtenues selon le procédé de l'invention, permet d'accéder à un système électrochimique, tel qu'une batterie ion, présentant de bonnes performances électrochimiques, en particulier en termes de stabilité en cyclage et de résistance à des vitesses de charge/décharge élevées.

L'invention concerne également un système électrochimique comprenant au moins une électrode comprenant à titre de matériau actif des particules d'un analogue Bleu de Prusse de formule (I) obtenues selon l'invention.

Le système électrochimique dans lequel est mis en oeuvre l'électrode selon l'invention peut être notamment un accumulateur électrochimique rechargeable.

Avantageusement, une électrode selon l'invention peut être mise en oeuvre dans une batterie en configuration cation-ion, notamment une batterie sodium-ion ou potassium-ion.

D'autres caractéristiques, variantes et avantages des matériaux composites selon l'invention, de leur préparation et de leur mise en oeuvre, ressortiront mieux à la lecture des exemples et figures qui vont suivre, donnés à titre illustratif et non limitatif de l'invention.

### Exemples

### Exemple 1 : Synthèse de microparticules de K₂Mn[Fe(CN)₆]

Les deux solutions suivantes ont été préparées :
- Solution A : 8,09 g de FeSO₄.7H₂O et 4,95 g de MnSO₄.H₂O dans 200 mL d'eau
- Solution B : 11,45 g de KCN dans 200 mL d'eau

Les solutions A et B ont été ajoutées simultanément dans un réacteur de coprécipitation contenant 11 d'eau, à un débit de 3,0 ml/min et à un pH de 9.9. La température dans le réacteur a été maintenue à 30 °C et son contenu a été agité à 1000 rpm. Les solutions A et B ainsi que le réacteur ont été, au préalable, désoxygénées sous argon. Un flux d'argon est maintenu durant toute l'expérience afin d'éviter l'oxydation des produits. Une fois les deux solutions introduites dans le réacteur, le contenu du réacteur a été laissé sous agitation pendant 4 heures sous atmosphère inerte.

Les microparticules de K₂Mn[Fe(CN)₆], correspondant au précipité issu de la réaction, ont été récupérées par centrifugation, lavées avec 400 ml d'eau désoxygénée et mises à sécher sous vide à 100 °C pendant une nuit.

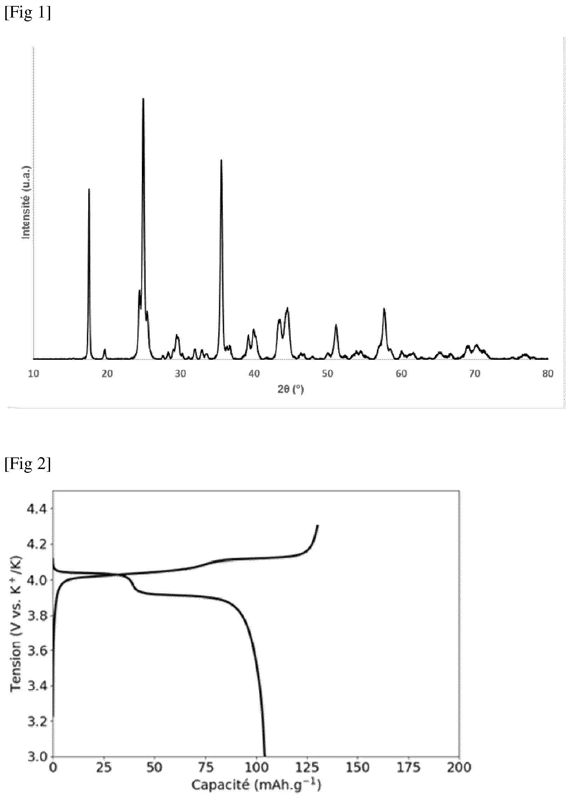

Elles ont été caractérisées par diffraction des rayons X. Le diffractogramme obtenu, illustré à la Figure 1, est caractéristique d'un matériau analogue Bleu de Prusse type « Blanc de Prusse », de structure monoclinique et de groupe d'espace P2₁/n (notation de Hermann-Mauguin).

Les microparticules ont également été caractérisées par microscopie électronique à balayage afin de caractériser leur forme. Elles présentent une allure sphérique et une D50 à 0.7 micromètres.

### Exemple 2 : Utilisation des particules formées en exemple 1 en tant que matériau actif d'une cathode d'une pile bouton

Les performances électrochimiques des particules obtenues à l'exemple 1 en tant que composant d'une cathode d'une pile bouton ont été évaluées.

Les particules ont été mélangées à un additif conducteur carboné (Carbone super P C65 ^{™}) et à du fluorure de polyvinylidène, PVDF 5130^{™}, en tant que polymère liant, dans du N-Méthyl-2-Pyrrolidone, NMP. La composition massique du mélange était la suivante : 70/20/10 (Matériau actif/ additif conducteur carboné / fluorure de polyvinylidène). Le mélange a été enduit sur aluminium puis laisser sécher à 65°C sous air pendant une nuit. Des électrodes de 14 mm de diamètre ont été découpées, calandrées à 10 tonnes et séchées sous vide à 80°C pendant 48h.

Les piles boutons ont été fabriquées en boîte à gant, en utilisant comme cathode les électrodes ainsi formées, comme anode du potassium métal, comme séparateur du Whatman GF/D et un électrolyte organique (0,7 M KPF₆ dans un mélange 1:1 d'éthylènecarbonate, EC, et de diéthylcarbonate, DEC, + 2 m% fluoroéthylène carbonate, FEC. Le régime de cyclage est C/20. Le profil galvanostatique obtenu au premier cycle est illustré à la Figure 2. On retrouve bien les deux plateaux de potentiel autour de 4 V vs. K⁺/K correspondant aux oxydations/réductions du fer et du manganèse du matériau K₂Mn[Fe(CN)₆]. On obtient initialement 105 mAh.g⁻¹ de capacité réversible.

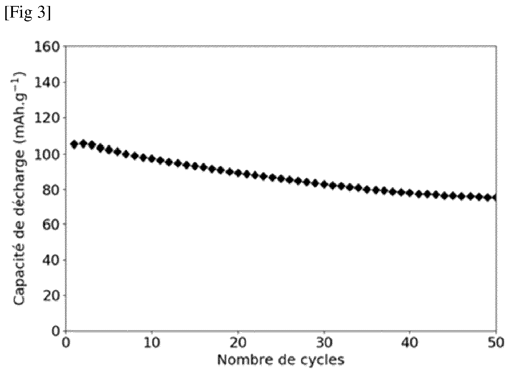

La courbe de cyclage (capacité de décharge en fonction du nombre de cycles) est illustrée à la Figure 3. Après 50 cycles, la capacité réversible atteint alors 80 mAh.g-1 environ.

## Revendications

1. Procédé de synthèse de particules d'un analogue Bleu de Prusse de formule (I) :
AₓM1_{y}M2_{z}(CN)₆ (I)
dans laquelle :
- A représente un atome de sodium, Na, ou de potassium, K,
- M1 et M2, identiques ou différents, sont choisis parmi les métaux de transition Ti, Nb, V, Cr, Mn, Fe, Co, Ni, Cu, Zn et de préférence parmi le Fe et le Mn,
- x est non nul et varie de 0 à 2,2, et préférentiellement est proche de 2
- y varie de 0 à 2
- z varie de 0 à 2
- y+z = 2
et ses hydrates,
comprenant au moins les étapes consistant à :
a) Disposer d'une part, d'une solution aqueuse A comprenant au moins un sel hydrosoluble d'un métal de transition M1 et au moins un sel hydrosoluble d'un métal de transition M2 et d'autre part, d'une solution aqueuse B contenant au moins du cyanure de potassium ou de sodium ;
b) Injecter simultanément, de manière séparée l'une de l'autre et à un débit contrôlé lesdites solutions A et B dans un réacteur, dit de précipitation, de sorte à réguler les phases de germination et de croissance des particules, ledit réacteur contenant au moins un milieu aqueux et en particulier de l'eau et
c) Maintenir dans ledit réacteur, le mélange des solutions A et B ainsi formé, sous agitation et dans des conditions propices à la formation de particules dudit analogue Bleu de Prusse de formule (I) par co-précipitation, les conditions propices étant réalisées par une atmosphère inerte, et une valeur de pH contrôlée variant de 8 à 11,
l'étape b étant également réalisée sous atmosphère inerte, à une valeur de pH contrôlée variant de 8 à 11.

2. Procédé selon la revendication précédente dans lequel lesdites particules de l'analogue Bleu de Prusse de formule (I) sont récupérées à l'issue de l'étape (c), notamment par centrifugation et le cas échéant lavées et séchées.

3. Procédé selon la revendication 1 ou 2 dans lequel le pH au sein dudit réacteur est ajusté directement en contrôlant le débit de la solution B.

4. Procédé selon l'une quelconque des revendications précédentes dans lequel le pH au sein dudit réacteur est ajusté par ajout d'une solution basique de NaOH ou KOH.

5. Procédé selon l'une quelconque des revendications précédentes **caractérisé en ce que** la réaction de précipitation est réalisée au sein dudit réacteur en présence d'au moins un agent chélatant en particulier choisi parmi le citrate de potassium, l'acide éthylènediaminetétraacétique, l'EDTA, et les oxalates.

6. Procédé selon la revendication précédente dans lequel l'agent chélatant est introduit dans le réacteur indépendamment des solutions A et B ou non.

7. Procédé selon l'une quelconque des revendications précédentes **caractérisé en ce que** le mélange est maintenu sous agitation en étape c) de 1h à 24h, préférentiellement de 2h à 6h.

8. Procédé selon l'une quelconque des revendications précédentes dans lequel la température dans le réacteur lors de l'étape c) est maintenue de 20°C à 70°C, préférentiellement de 25°C à 35°C.

9. Procédé selon l'une quelconque des revendications précédentes dans lequel ladite solution A contient, à titre de sel de M1, un sel de manganèse choisi parmi les sels Mn(NO₃)₂, Mn(SO₄)₂, MnCl₂, Mn(CH₃CO₂)₂ et leurs hydrates et de préférence le sel MnSO₄.H₂O et à titre de sel de M2, un sel de fer choisi parmi les sels Fe(NO₃)₂, Fe(SO₄)₂, FeCl₂ et leurs hydrates et de préférence le FeSO₄.7H₂O.

10. Procédé selon l'une quelconque des revendications précédentes dans lequel ledit sel de cyanure de la solution B et les sels de métaux de transition M1 et M2 de la solution A sont mis en présence dans un rapport molaire sels M1+M2/CN de K ou Na variant de 2,5 à 3,5, préférentiellement 3.

11. Procédé selon l'une quelconque des revendications précédentes dans lequel les particules dudit analogue Bleu de Prusse de formule (I) sont des particules de K₂Mn[Fe(CN)₆], Na₂Mn[Fe(CN)₆] et de préférence de K₂Mn[Fe(CN)₆].

12. Particules d'un analogue Bleu de Prusse de formule (I) :
AₓM1_{y}M2_{z}(CN)₆ (I)
obtenues par le procédé selon les revendications 1 à 11, dans laquelle :
- A représente un atome de sodium, Na, ou de potassium, K,
- M1 et M2, identiques ou différents, sont choisis parmi le Fe et le Mn,
- x est non nul et varie de 0 à 2,2, et préférentiellement est de l'ordre de 2
- y varie de 0 à 2
- z varie de 0 à 2 et
- y+z = 2
lesdites particules possédant un D50 de 0,5 µm à 25 µm, **caractérisé par** granulométrie laser.

13. Utilisation des particules selon la revendication 12 à titre de matériau actif pour cathode.

14. Utilisation des particules selon la revendication 12 dans une batterie sodium-ion ou potassium-ion.
